# EUROPEAN PATENT APPLICATION

(11) **EP 4 512 566 A1**
(43) Date of publication of application: **26.02.2025**
(21) Application number: 24792057.2
(22) Date of filing: 17.04.2024
(51) Int. Cl.: B23K 26/00

(54) **LASER PROCESSING METHOD AND APPARATUS, ELECTRONIC DEVICE, AND STORAGE MEDIUM**

(30) Priority: 17.04.2023 CN 202310453883
(71) Applicant: Makeblock Co., Ltd., Shenzhen, Guangdong 518000 (CN)
(72) Inventor: LI, Huan, Shenzhen, Guangdong 518000 (CN); FAN, Fei, Shenzhen, Guangdong 518000 (CN)
(74) Representative: Patentanwaltskanzlei Matschnig & Forsthuber OG
(86) International application number: PCT/CN2024/088413
(87) International publication number: WO 2024/217472

(57) **Abstract**

A laser processing method and apparatus, an electronic device, and a storage medium. The method comprises: before an element to be processed is processed into an object to be processed, according to a relation between a position of a projection image in a processing area and a target processing position of said object, determining whether said element is aligned with said object, the projection image comprising a projection image corresponding to at least part of said element or a projection image corresponding to a calibration feature of said element; and, when it is detected that said element and said object are not aligned, aligning and calibrating said element and said object by means of adjusting the positions of said element and/or said object. Alignment and calibration before processing improve the processing precision.

## Description

The present application claims the priority to Chinese Patent Application No. 2023104538830, titled "PROCESSING AND CONTROLLING METHOD AND LASER PROCESSING DEVICE", filed with the China National Intellectual Property Administration on April 17, 2023, the entire disclosure of which is incorporated herein by reference.

### FIELD

The present application relates to the technical field of laser processing, and in particular to a laser processing method, a device, an electronic equipment, and a storage media.

### BACKGROUND

At present, lasers are generally used for engraving or cutting. However, due to the lack of calibration and positioning for the element to be processed with respect to the target position before processing, the text or pattern on the processed workpiece may deviate from the expected target processing position, resulting in low processing accuracy and other problems.

### SUMMARY

A main purpose of embodiments of the present application is to provide a laser processing method, a device, an electronic device and a storage medium, which is able to align element to be processed and a workpiece to be processed before processing and improve the processing accuracy.

According to a first aspect of an embodiment of the present application, a laser processing method includes:
before the element to be processed is processed to the workpiece to be processed, determining whether the element to be processed and the workpiece to be processed are aligned according to the relationship between the position of the projection image in the processing area and the target processing position of the workpiece to be processed, and the projection image includes a projection image corresponding to at least a part of the element to be processed or a projection image corresponding to the calibration feature of the element to be processed;
if the element to be processed and the workpiece to be processed are not aligned, adjusting the position of the workpiece to be processed and/or the position of the element to be processed so that the position of the projection image in the processing area corresponds to the target processing position of the workpiece to be processed.

According to the second aspect of the embodiment of the present application, a laser processing device is provided, including a laser, and the laser is used to perform the method described in the first aspect of the embodiment of the present application.

In one embodiment of the present application, the laser processing device further includes a device terminal, which is connected to the laser, and the device terminal interacts with the laser to execute the method as described in the first aspect of the embodiment of the present application.

In one embodiment of the present application, the laser includes a control board, a laser generator, and an expansion accessory that can move along a first direction; the control board, the laser generator, and the expansion accessory are all connected to the device terminal;
the control board is connected to the laser generator and the expansion accessory respectively; the processing area is formed below the laser, and the light beam emitted by the laser generator is focused on the processing area, the expansion accessory is located below the laser generator, and is used to carry the workpiece to be processed and drive the workpiece to be processed to move, and the expansion accessory passes through the processing area during the movement.

In one embodiment of the present application, the laser further includes a galvanometer, which is connected to the device terminal, and the galvanometer is also connected to the control board, and the galvanometer is used to reflect the laser beam emitted by the laser generator to change the emission angle of the laser.

In one embodiment of the present application, the laser processing equipment further includes a camera, which is arranged on the laser generator and is used to capture an image of the processing area.

According to the third aspect of the embodiment of the present application, an electronic device is provided, the electronic device includes a memory and a processor, the memory stores a computer program, and the processor implements the method described in the first aspect of the embodiment of the present application when executing the computer program.

According to the fourth aspect of the embodiment of the present application, a computer-readable storage medium is provided, the storage medium stores a computer program, and the method described in the first aspect of the embodiment of the present application is implemented when the computer program is executed by the processor.

In the technical solution provided in the embodiment of the present application, before the element to be processed is processed to the workpiece to be processed, firstly, it is determined whether the element to be processed and the workpiece to be processed are aligned according to the relationship between the position of the projection image in the processing area and the target processing position of the workpiece to be processed, the projection image includes a projection image corresponding to at least a part of the element to be processed or a projection image corresponding to the calibration feature of the element to be processed. Therefore, if it is detected that the element to be processed and the workpiece to be processed are not aligned, the position of the element to be processed and/or the workpiece to be processed can be adjusted to align the element to be processed and the workpiece to be processed. By performing alignment calibration before processing, the processing accuracy can be improved.

Other features and advantages of the present application become apparent from the following detailed description, or in part, learned through the practice of the present application.

It should be understood that the above general description and the following detailed description are only exemplary and cannot limit the present application.

### BRIEF DESCRIPTION OF THE DRAWINGS

By describing example embodiments in detail with reference to the accompanying drawings, the above and other objects, features and advantages of the present application become more apparent.
FIG. 1 is a schematic block diagram of laser processing implementation environment provided by an embodiment of the present application.
FIG. 2 is a flow chart of a laser processing method provided by the embodiment of the present application.
FIG. 3 is a flow chart of the steps of determining whether the element to be processed and the workpiece to be processed are aligned according to the relationship between the position of the projected image in the processing area and the target processing position of the workpiece to be processed provided by the embodiment of the present application.
FIG. 4 is a flow chart of the steps of determining whether the element to be processed and the workpiece to be processed are aligned according to the relationship between the position of the projected image in the processing area and the target processing position of the workpiece to be processed provided by the embodiment of the present application.
FIG. 5 is an example diagram of alignment detection provided by the embodiment of the present application.
Figure 6 is another example diagram of alignment detection provided by the embodiment of the present application.
FIG. 7 is a flow chart of the steps of controlling the synchronous movement of the projection image and the workpiece to be processed provided by the embodiment of the present application.
FIG. 8 is a schematic diagram of corresponding relationship between an extension area and a processing area provided by the embodiment of the present application.
FIG. 9 is a schematic diagram of a display interface of a laser processing control application program provided by the embodiment of the present application.
FIG. 10 is a schematic block diagram of a structure of the laser processing device provided by the embodiment of the present application.
FIG.11 is a schematic diagram of a hardware structure of the electronic device provided in the embodiment of the present application.

### Reference numerals:

laser-100; equipment terminal-200; element to be processed-10; workpiece to be processed-20; control board-110; galvanometer-120; laser generator-130; camera-140; expansion accessory-150; expansion area-151; processing area-131; expanded image area-132.

### DETAILED DESCRIPTION OF THE EMBODIMENTS

The example embodiments is now be described more fully with reference to the accompanying drawings. However, the example embodiments can be implemented in a variety of forms and should not be construed as being limited to the examples set forth herein; rather, these example embodiments are provided so that the description of the present application is more comprehensive and complete, and the concept of the example embodiments is fully conveyed to those skilled in the art. The accompanying drawings are only schematic illustrations of the present application and are not necessarily drawn to scale. The same reference numerals in the drawings represent the same or similar parts, and thus repeated description for them is omitted.

In addition, the described features, structures, or characteristics may be combined in any suitable manner in one or more example embodiments. In the following description, many specific details are provided for a full understanding of the example embodiments of the present application. However, those skilled in the art can understand that the technical solutions of the present application may be practiced while omitting one or more of the specific details, or, other methods, components, steps, etc. may be adopted. In other cases, well-known structures, methods, implementations, or operations are not shown or described in detail to avoid obscuring aspects of the present application by overshadowing the main subject.

Some of the block diagrams shown in the accompanying drawings are functional entities that do not necessarily correspond to physically or logically independent entities. These functional entities can be implemented in software, or in one or more hardware modules or integrated circuits, or in different networks and/or processor devices and/or microcontroller devices.

Laser processing is a processing method that places the workpiece to be processed under a focused beam of high energy density, and uses the photothermal effect of light to vaporize or oxidize the surface of the workpiece and further to change the color and shape of a surface of the workpiece. An existing laser marking and cutting equipment generally includes a laser head, a galvanometer cavity, and a marking platform. Because laser processing has the advantages of fast processing speed and small deformation to the surface of the workpiece, and can be applied to the processing of various materials, laser processing technology is becoming more and more important in the modern production process. With the development of laser processing and marking technology, people have put forward higher requirements for the efficiency, practicality, and reliability of laser processing and marking in the actual production process.

When the workpiece is processed by the laser, the workpiece is horizontally secured on the stage, and the laser is located directly above the workpiece. The laser can emit laser light with a laser light path extending in the vertical direction toward the surface to be processed of the workpiece, and then process the workpiece to obtain the desired processing element.

At present, during the processing of the laser, if the element to be processed is out of a range that can be displayed in the processing area, that is, if the element to be processed cannot be fully displayed in the processing area, the position of the element to be processed projected on the workpiece to be processed cannot be observed, and thus the position of the element to be processed projected on the workpiece to be processed cannot be calibrated and adjusted, which may cause the workpiece to only have partial text or pattern after processing, and the processing accuracy is low. Moreover, a carrier of an existing laser marking and cutting equipment can usually only place one workpiece. When the processing is completed, the equipment has to stop working. Next workpiece can only be processed after the loading and unloading thereof is completed, and the efficiency is low.

Based on this, a laser processing method, a device, an electronic device and a storage medium are provided, which can align the element to be processed and the workpiece to be processed before processing and can improve the processing accuracy.

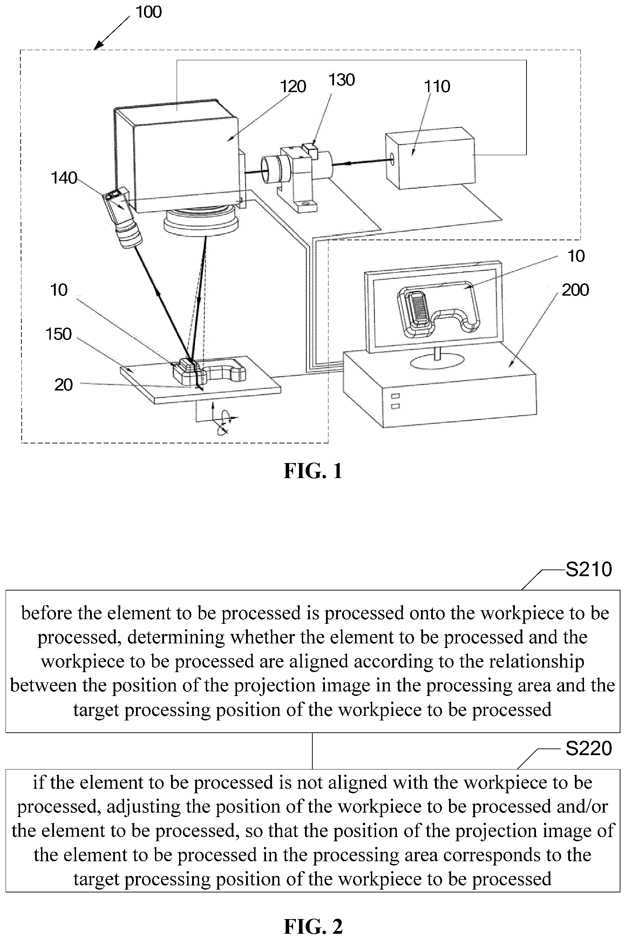

Referring to FIG. 1, FIG. 1 is a schematic block diagram of laser processing implementation environment provided by an embodiment of the present application. As shown in FIG. 1, a laser 100 is connected to a device terminal 200. The device terminal 200 can be operated by a client, and it can be a desktop computer, a laptop computer, a tablet computer, a smart phone, an intelligent voice interaction device, a smart home appliance, a car terminal and other electronic devices, which are not limited here. The client terminal can be in the form of an application program or software, or in the form of a web page. Correspondingly, the user interface of the client terminal can be in the form of a program window or a web page, which is not limited here. For example, an application program or software for laser processing control can be run on the device terminal 200.

The laser 100 is located above the workpiece, and can emit a laser beam extending in a vertical direction to a surface of the workpiece to be processed, thereby performing a processing to the workpiece and further obtaining the desired processed workpiece.

The laser 100 can also display a projection image corresponding to at least a part of the element to be processed or a projection image corresponding to the calibration feature of the element to be processed in the processing area, and then before processing, it can be determined whether the element to be processed and the workpiece to be processed are aligned based on the relationship between the position of the projection image in the processing area and the target processing position of the workpiece to be processed, and if it is detected that the element to be processed and the workpiece to be processed are not aligned, the position of the workpiece to be processed and/or the element to be processed is adjusted to align the workpiece to be processed and the element to be processed. Since alignment detection and alignment calibration before processing are performed, the processing accuracy can be improved.

It should be noted that in the embodiment of the present application, the laser 100 and the device terminal 200 can be independent devices, and the laser 100 and the device terminal 200 can also be integrated as one device.

Continuing to refer to FIG. 1, the laser 100 includes a control board 110, a galvanometer 120, a laser generator 130, and an expansion accessory 150 that can move along a first direction. The control board 110, the galvanometer 120, the laser generator 130 and the expansion accessory 150 which is movable in the first direction are all connected to the device terminal 200. The first direction may be an X-axis direction. The control board 110 is connected to the galvanometer 120, the laser generator 130 and the expansion accessory 150, so as to send control instructions to the galvanometer 120, the laser generator 130 and the expansion accessory 150, and thereby completing the alignment calibration and processing control of the workpiece to be processed 20 and the element to be processed 10 before processing. The galvanometer 120 is used to reflect the laser emitted by the laser generator 130 and change the laser emission angle by vibration, so as to realize the engraving/cutting and other processing for the element to be processed 10.

The processing area is formed below the laser generator 130, for example, the processing area can be formed vertically below the laser generator 130. The light beam emitted by the laser generator 130 is focused on the processing area. The expansion accessory 150 is located below the laser generator 130, for example, the expansion accessory 150 is located vertically below the laser generator 130. The expansion accessory 150 is used to carry the workpiece to be processed 20 and drive the workpiece to be processed 20 to move, and the expansion accessory 150 may pass through the processing area during the movement.

Continuing to refer to FIG. 1, the laser processing equipment also includes a camera 140, which is connected to the terminal device 200, and the camera 140 is set on the laser generator 130, which can be used to capture images of the processing area. The camera 140 can upload the captured image to the device terminal 200, and then the device terminal 200 processes the image captured by the camera 140 to determine whether the workpiece to be processed 20 and the element to be processed 10 are aligned before processing according to the image processing result, so that if it is determined that the workpiece to be processed 20 and the element to be processed 10 are not aligned, further alignment calibration operation can be performed.

In the embodiment of the present application, as shown in FIG.1, the laser 100 is connected to the device terminal 200, so that the laser 100 can interact with the device terminal 200 to realize alignment calibration before processing and processing the element to be processed 10 to the target processing position of the workpiece to be processed 20 after alignment.

Referring to FIG. 2, FIG. 2 is a flow chart of the laser processing method provided in the embodiment of the present application. The laser processing method can be applied to the implementation environment shown in FIG. 1, including but not limited to steps S210 to S220.

Step S210, before the element to be processed is processed onto the workpiece to be processed, determining whether the element to be processed and the workpiece to be processed are aligned according to the relationship between the position of the projection image in the processing area and the target processing position of the workpiece to be processed.

In the embodiment of the present application, there is a situation that only part of the element to be processed 10 is processed on the workpiece to be processed 20, or the position of the element to be processed 10 processed onto the workpiece to be processed 20 deviates from the target processing position on the workpiece to be processed 20 in the laser processing using the laser processing equipment. To avoid this situation, before the element to be processed 10 is processed onto the workpiece to be processed 20, the processing alignment can be performed to ensure the processing accuracy. Specifically, it can be determined whether the element to be processed 10 and the workpiece to be processed 20 are aligned according to the relationship between the position of the projection image in the processing area and the target processing position of the workpiece to be processed 20. If the position of the projection image in the processing area corresponds to the target processing position of the workpiece to be processed 20, it can be determined that the element to be processed 10 and the workpiece to be processed 20 are aligned. If the position of the projection image in the processing area does not correspond to the target processing position of the workpiece to be processed 20, it can be determined that the element to be processed 10 is not aligned with the workpiece to be processed 20. The projection image includes a projection image corresponding to at least a portion of the element to be processed 10 or a projection image corresponding to the calibration feature of the element to be processed 10. That is, the projection image may be a projection image corresponding to the entire element to be processed 10, the projection image may also be a projection image corresponding to a portion of the element to be processed 10, and the projection image may also be a projection image corresponding to the calibration feature of the element to be processed 10.

In the embodiment of the present application, if the position of the projection image in the processing area falls within the region of the target processing position of the workpiece to be processed 20, it is considered that the position of the projection image in the processing area corresponds to the target processing position of the workpiece to be processed 20. It should be noted that if the position of the projection image in the processing area deviates from the target processing position of the workpiece to be processed 20, but the deviation distance is within a predetermined value, it is considered that the position of the projection image in the processing area falls within the region of the target processing position of the workpiece to be processed 20, that is, it is considered that the position of the projection image in the processing area corresponds to the target processing position of the workpiece to be processed 20.

In one embodiment of the present application, if the position of the projected image in the processing area overlaps with the target processing position of the workpiece to be processed 20, it is considered that the position of the projected image in the processing area corresponds to the target processing position of the workpiece to be processed 20, and the alignment of the workpiece to be processed 20 and the element to be processed 10 can be determined. If the position of the projected image in the processing area coincides with the target processing position of the workpiece to be processed 20, the element to be processed 10 can be accurately processed to the target processing position of the workpiece to be processed 20, and the processing accuracy can be guaranteed.

In one embodiment of the present application, before the element to be processed 10 is processed onto the workpiece to be processed 20, it is necessary to obtain the element to be processed 10 first, and the element to be processed 10 includes at least one of text, symbols, lines, and graphics.

In one embodiment of the present application, the element to be processed 10 can be obtained by drawing via the device terminal 200, or by identifying via a file storing the element to be processed 10, such as importing the file storing the element to be processed 10 into the device terminal 200, and then identifying the element to be processed 10 by the device terminal 200. The element to be processed 10 can also be obtained by extracting features from a picture of the element to be processed 10, such as uploading a picture of the element to be processed 10 to the device terminal 200, and then extracting features from the picture by the device terminal 200 to obtain the element to be processed 10.

In one embodiment of the present application, after the device terminal 200 obtains the element to be processed 10, the device terminal 200 also needs to convert the element to be processed 10 into a machine code that can be recognized and executed by a laser processing device, that is, the laser 100 shown in FIG. 1, so that the laser 100 can perform the alignment operation before processing and the processing operation after alignment, such as the laser 100 can project at least a part of the element to be processed 10 or the calibration feature of the element to be processed 10 to the processing area according to the machine code, and the laser 100 can also process the element to be processed 10 to the target processing position of the workpiece to be processed 20 according to the machine code.

In one embodiment of the present application, after obtaining the element to be processed 10, the device terminal 200 also processes the element to be processed 10 to obtain the calibration feature. The calibration feature includes the overall feature of the element to be processed, the feature that indicates the area where the overall feature of the element to be processed is located, the partial feature of the element to be processed, or the feature that indicates the area where the partial feature of the element to be processed is located.

In one embodiment of the present application, the calibration feature includes the outer contour of the element or the border of the area where the element is located, and the element to be processed is processed to obtain the calibration feature, including:
extracting the element contour or the border of the area where the element is located for the element to be processed to obtain the outer contour of the element or the border of the area where the element is located. The border of the area where the element is located may be a rectangular frame where the element is located, a square frame where the element is located, etc.. By processing the element to be processed 10 to obtain the outer contour of the element or the border of the area where the element is located, during the alignment calibration process before processing, the relationship between the position of the projection image of the outer contour of the element or the border of the area where the element is located in the processing area and the target processing position of the workpiece to be processed 20 can be detected, so as to determine whether the element to be processed 10 and the workpiece to be processed 20 are aligned. That is, during the calibration process, only the outer contour of the element or the border of the area where the element is located needs to be calibrated to fall into the target processing position of the workpiece to be processed, which can improve the efficiency of calibration and alignment, and thus improve the processing efficiency.

In one embodiment of the present application, the calibration feature includes a key feature of the element to be processed or a diagonal position feature of the element to be processed, and the calibration feature is obtained by processing the element to be processed, including:
performing key feature extraction processing or diagonal line extraction processing for the element to be processed to obtain the key feature of the element to be processed or the diagonal position feature of the element to be processed. The key feature is a feature that indicates the characteristics of the element to be processed. The diagonal position feature is a feature used to indicate the diagonal position of the element to be processed, such as the position of the diagonal line. By processing the element to be processed 10 to obtain the key feature of the element to be processed 10 or the diagonal position feature of the element to be processed 10, in the alignment calibration process before processing, the position of the projection image of the key feature or the diagonal position feature in the processing area can be detected. The relationship between the target processing position of the workpiece to be processed 20 can be used to determine whether the element to be processed 10 and the workpiece to be processed 20 are aligned. That is, in the calibration alignment process, only the key feature or the diagonal position feature needs to be calibrated to fall into the target processing position of the workpiece to be processed 20, which can improve the efficiency of calibration alignment, and thus improve the processing efficiency.

Step S220, if the element to be processed is not aligned with the workpiece to be processed, adjusting the position of the workpiece to be processed and/or the element to be processed, so that the position of the projection image of the element to be processed in the processing area corresponds to the target processing position of the workpiece to be processed.

In the embodiment of the present application, the device terminal 200 can draw or obtain the element to be processed 10 by running the laser processing control application program or software, and then send the element to be processed 10 to the control board 110 of the laser 100. The laser generator 130 of the laser 100 can continuously emit light in the processing area, so that at least a part of the element to be processed 10 or the calibration feature of the element to be processed 10 can be projected and displayed in the processing area through the control board 110. The workpiece to be processed 20 is placed on the expansion accessory 150 that can move along the first direction, and moves with the expansion accessory 150. Therefore, that controlling the movement of the expansion accessory 150 is equivalent to control the movement of the workpiece to be processed 20. The control board 110 of the laser 100 can calculate the operation of the expansion accessory 150 and the projected image, and can realize the synchronous movement of the projected image and the workpiece to be processed 20, that is, the projected image can move together with the expansion accessory 150. During the movement, the workpiece to be processed 20 may pass through the processing area, so that the specific position of the projected image on the workpiece to be processed 20 can be displayed in the processing area. Therefore, the relationship between the position of the projected image on the workpiece to be processed 20 and the target processing position of the workpiece to be processed 20 can be observed in the processing area, and whether the element to be processed 10 and the workpiece to be processed 20 are aligned can be determined based on the observation results.

For example, the projection image of the processing area projected onto the workpiece to be processed 20 can be photographed by the camera 140, and then uploaded to the device terminal 200, and the device terminal 200 processes the projection image to determine whether the position of the projection image corresponds to the target processing position of the workpiece to be processed 20.

In the embodiment of the present application, after calibration and alignment that makes the position of the projection image in the processing area correspond to the target processing position of the workpiece to be processed 20, the control board 110 may receive the processing signal sent by the device terminal 200. Thus, the control board 110 may issue a processing control instruction to the galvanometer 120 and the laser generator 130 to control the galvanometer 120 and the laser generator 130 to process the element to be processed 10 at the target processing position of the workpiece to be processed 20.

It can be understood that the embodiment of the present application does not limit the adjustment method of the workpiece to be processed 20. The workpiece to be processed 20 can be adjusted in any direction, as long as the position of the projection image in the processing area can be made to correspond to the target processing position of the workpiece to be processed 20 through adjustment.

In the embodiment of the present application, if it is detected that the element to be processed 10 and the workpiece to be processed 20 are not aligned, an adjustment signal can be sent to the device terminal 200 in addition to calibrating the alignment by adjusting the position of the workpiece to be processed 20, so that the device terminal 200 can adjust the position of the element to be processed 10 according to the adjustment signal. Then the device terminal 200 can send the adjusted element to be processed 10 to the control board 110, so that the control board 110 can perform projection calibration according to the adjusted element to be processed 10.

For example, in a case that the element to be processed 10 includes multiple small elements in discontinuous distribution, if it is observed through the processing area that the target sub-element is not projected on the target processing sub-position of the workpiece to be processed 20, moving the workpiece to be processed 20 as a whole may cause other target processing sub-positions to be unable to align. At this time, the device terminal 200 can adjust the position of the target sub-element by sending an adjustment signal to the device terminal 200, so as to achieve calibration and alignment for each of the multiple small elements to be processed 10 and the workpiece to be processed 20.

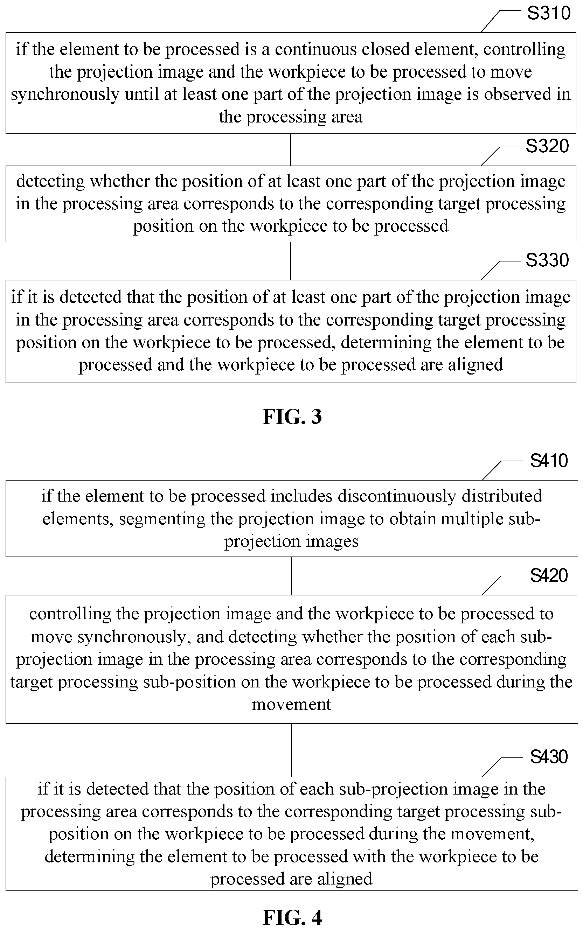

Referring to FIG. 3, FIG. 3 is a flowchart of steps for determining whether the element to be processed and the workpiece to be processed are aligned according to the relationship between the position of the projection image in the processing area and the target processing position of the workpiece to be processed, provided in an embodiment of the present application. The flowchart in FIG. 3 can applied to the implementation environment shown in FIG. 1, including but not limited to steps S310 to S330.

Step S310, if the element to be processed is a continuous closed element, controlling the projection image and the workpiece to be processed to move synchronously until at least one part of the projection image is observed in the processing area.

Step S320, detecting whether the position of at least one part of the projection image in the processing area corresponds to the corresponding target processing position on the workpiece to be processed.

Step S330, if it is detected that the position of at least one part of the projection image in the processing area corresponds to the corresponding target processing position on the workpiece to be processed, determining the element to be processed and the workpiece to be processed are aligned.

In the embodiment of the present application, if the element to be processed 10 cannot be completely displayed in the processing area, it is further considered whether the element to be processed 10 is a continuous closed element, such as a bitmap. If the element to be processed 10 is a continuous closed element, the projection image and the workpiece to be processed 20 are controlled to move synchronously until at least one part of the projection image can be observed in the processing area. At this time, it is only necessary to observe in the processing area whether the at least one part of the projection image corresponds to the target processing position projected on the workpiece to be processed 20. If yes, it means that the element to be processed 10 and the workpiece to be processed 20 are aligned. If not, it means that the element to be processed 10 and the workpiece to be processed 20 are not aligned. If the element to be processed is a continuous closed element, it can be determined whether the element to be processed 10 and the workpiece to be processed 20 are aligned only by judging whether the position of at least one part of the projection image in the processing area corresponds to the target processing position corresponding to the workpiece to be processed 20. It is not necessary to judge whether the position of the entire projection image of the processing area corresponds to the target processing position corresponding to the workpiece to be processed 20, which improves the efficiency of calibration and alignment, and thus improves the processing efficiency.

In one embodiment of the present application, in a case that the element to be processed is a continuous closed element, if it is detected that the position of at least one part of the projected image in the processing area does not correspond to the corresponding target processing position on the workpiece to be processed 20, determining the element to be processed 10 is not aligned with the workpiece to be processed 20. At this time, by adjusting the position of the workpiece to be processed 20 and/or the element to be processed 10, the position of the at least one part of the projected image in the processing area corresponds to the corresponding target processing position on the workpiece to be processed 20, so that the element to be processed 10 can be aligned with the workpiece to be processed 20.

For example, the workpiece to be processed 20 is a rectangular flat plate having an area larger than the area of the processing area, which is horizontally placed on the expansion accessory 150 and aligned with the left edge of the expansion accessory 150. The element to be processed 10 is the outer contour of a cat head image. At this time, the projection image and the expansion accessory 150 are synchronously moved to the left to make the left 1/4 of the rectangular flat plate in the processing area, and then a part of the projection image can be observed in the processing area, for example, the projection image corresponding to the outer contour of the two ears of the cat's head is observed in the processing area to determine whether it is in the middle of the left 1/4 of the rectangular flat plate. If yes, it means that the element to be processed 10 and the workpiece to be processed 20 are well aligned, and laser processing can be performed directly. If not, the calibration and alignment can be performed by adjusting the position of the workpiece to be processed (i.e., the rectangular flat plate), or the position of the element to be processed can be adjusted, or the position of the workpiece to be processed and the position of the element to be processed. Laser processing can also be performed after alignment. There is no need to continue alignment calibration during the movement process.

It is understood that, since the element to be processed 10 is a continuous closed element, as long as a front end portion of the element to be processed 10 is aligned with the front end target position of the workpiece to be processed 20, the subsequent portions are definitely aligned. Therefore, it is only necessary to move the workpiece to be processed 20 and a part of the projection image to the processing area to perform alignment judgment and alignment calibration. It is not necessary to move the workpiece to be processed 20 and the projection image as a whole through the processing area for alignment calibration. The efficiency of calibration alignment can be improved.

Referring to FIG. 4, FIG. 4 is a flowchart of the steps for determining whether the element to be processed and the workpiece to be processed are aligned according to the relationship between the position of the projection image in the processing area and the target processing position of the workpiece to be processed, provided in an embodiment of the present application. The flowchart in FIG. 4 can be applied to the implementation environment shown in FIG. 1, including but not limited to steps S410 to S430.

Step S410, if the element to be processed includes discontinuously distributed elements, segmenting the projection image to obtain multiple sub-projection images.

Step S420, controlling the projection image and the workpiece to be processed to move synchronously, and detecting whether the position of each sub-projection image in the processing area corresponds to the corresponding target processing sub-position on the workpiece to be processed during the movement.

Step S430, if it is detected that the position of each sub-projection image in the processing area corresponds to the corresponding target processing sub-position on the workpiece to be processed during the movement, determining the element to be processed with the workpiece to be processed are aligned.

In the embodiment of the present application, when the projection image cannot be fully displayed in the processing area, it is further considered whether the element to be processed 10 includes discontinuously distributed elements, and these discontinuously distributed elements need to be processed to different positions of the workpiece to be processed 20. If the element to be processed 10 includes discontinuously distributed elements, and need to be processed to different positions of the workpiece to be processed 20. At this time, the projection image is segmented to obtain multiple sub-projection images, the projection image and the workpiece to be processed 20 are controlled to move synchronously, and during the movement, whether each sub-projection image corresponds to the target processing sub-position projected on the workpiece to be processed 20 in the processing area is observed. If each sub-projection image is projected on the target processing sub-position corresponding to the workpiece to be processed 20, it means that the element to be processed 10 is aligned with the workpiece to be processed 20. If the position of some sub-projection images does not correspond to the target processing sub-position corresponding to the workpiece to be processed 20, it means that some sub-projection images in each sub-projection image are not aligned with the target processing sub-position corresponding to the workpiece to be processed 20, and need to be adjusted. At this time, since the workpiece to be processed 20 is a whole, the position of the element to be processed can be adjusted by the device terminal 200 to perform calibration and alignment. That is, alignment detection needs to be performed in the process of synchronously moving the projection image and the workpiece to be processed 20.

In an embodiment of the present application, in a case that the element to be processed 10 includes discontinuously distributed elements, it is necessary to detect whether the position of each sub-projection image corresponds to each target processing sub-position corresponding to the workpiece to be processed 20 in the processing area. If the position of each sub-projection image corresponds to each target processing sub-position corresponding to the workpiece to be processed 20, it can be determined that the element to be processed 10 is aligned with the workpiece to be processed 20.

In an embodiment of the present application, in a case that the element to be processed includes discontinuously distributed elements, if it is detected during the movement that the position of each sub-projection image in the processing area does not correspond to each target processing sub-position corresponding to the workpiece to be processed, it can be determined that the element to be processed is not aligned with the workpiece to be processed; if it is detected during the movement that the position of some sub-projection images in the processing area does not correspond to the target processing sub-position corresponding to the workpiece to be processed, it can be determined that the element to be processed is not aligned with the workpiece to be processed. At this time, by adjusting the position of the element to be processed, the position of each sub-projection image in the processing area can be correspond to each target processing sub-position corresponding to the workpiece to be processed. Thereby, the element to be processed 10 can be aligned with the workpiece to be processed 20.

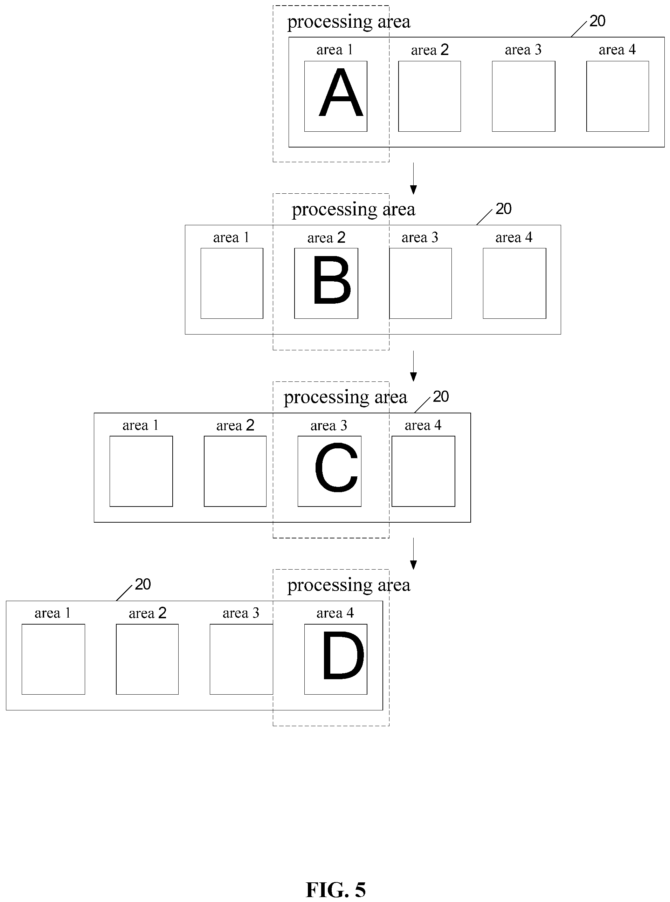

For example, referring to FIG. 5, FIG. 5 is an example diagram of alignment detection provided by an embodiment of the present application. The workpiece to be processed 20 is a rectangular flat plate with an area larger than the area of the processing area, which is placed horizontally on the expansion accessory 150 and aligned with the left edge of the expansion accessory 150. The rectangular flat plate includes four unconnected areas from left to right, namely area 1, area 2, area 3 and area 4, and the elements to be processed are four different letters distributed discontinuously, namely A, B, C, and D. A needs to be processed to area 1, B needs to be processed to area 2, C needs to be processed to area 3, and D needs to be processed to area 4. At this time, the element to be processed 10 and the expansion accessory 150 are moved to the left synchronously, and the middle position of area 1 is observed in the processing area to see whether there is a projected letter A. If yes, continuing to move to the left. If not, pausing the movement, and adjusting the position of the letter A through the device terminal 200 so that the letter A is projected to the middle position of area 1. Then movement to the left is continued, and whether there is a projected letter B in the middle of area 2 in the processing area is observed. If yes, continuing to move to the left. If not, pausing and adjusting the position of letter B through the device terminal 200 so that letter B is projected to the middle of area 2. Then movement to the left is continued, and whether there is a projected letter C in the middle of area 3 in the processing area is observed. If yes, continuing to move to the left. If not, pausing and adjusting the position of letter C through the device terminal 200 so that letter C is projected to the middle of area 3. Then movement to the left is continued, and whether there is a projected letter D in the middle of area 4 in the processing area is observed. If yes, continuing to move to the left. If not, pausing and adjusting the position of letter D through the device terminal 200 so that letter D is projected to the middle of area 4. In this way, the movement can be stopped only after all the sub-target positions corresponding to the processing of the workpiece to be processed have been calibrated and aligned through the processing area.

In one embodiment of the present application, multiple workpieces 20 to be processed can also be placed on the widening accessory 150, and the corresponding elements 10 to be processed of each workpiece to be processed 20 can be drawn or obtained through the device terminal 200. Then, by synchronously moving the widening accessory 150 and the projection images corresponding to each element to be processed 10, each workpiece to be processed 20 of the widening accessory 150 can pass through the processing area. Therefore, it can be observed one by one in the processing area whether the projection images corresponding to each element to be processed 10 are projected on the target processing sub-position corresponding to the workpiece to be processed 20, and each workpiece to be processed 20 and each element to be processed 10 can be calibrated and aligned continuously, so that each workpiece to be processed 20 can be processed continuously after calibration and alignment.

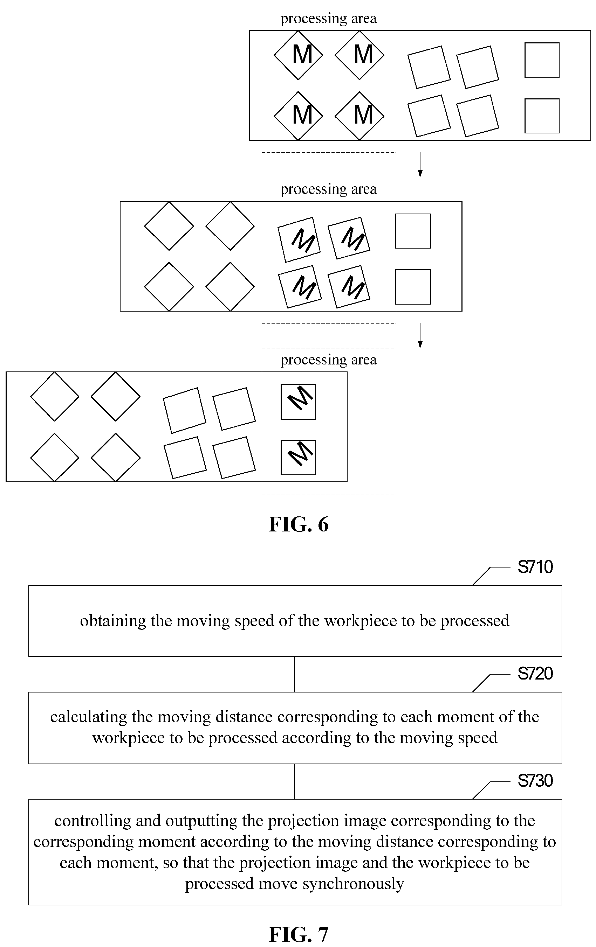

For example, referring to FIG. 6, FIG. 6 is another example diagram of alignment detection provided in an embodiment of the present application. There are 10 small squares to be processed on the widening accessory 150. A letter **M** needs to be processed on the upper surface of each small square. At this time, the laser processing control application program or software can be run through the device terminal 200, and ten letters **M** can be drawn on the corresponding display interface, and these 10 letters do not overlap and are distributed at a certain interval. First, the expansion accessory 150 and the projection images corresponding to the 10 letters **M** are synchronously moved. The projection images of the first group of 4 letters **M** can be observed in the processing area first, and a small square is placed at the position where the projection image of each letter **M** appears, so that the letter **M** is just projected on the upper surface of the small square. Then the projection images of the second group of 4 letters **M** can be observed in the processing area, and a small square is placed at the position where the projection image of each letter **M** appears, so that the letter **M** is just projected on the upper surface of the small square. Then the projection images of the third group of 2 letters **M** can be observed in the processing area, and a small square is placed at the position where the projection image of each letter **M** appears, so that the letter **M** is just projected on the upper surface of the small square. In this way, the ten small squares to be processed are continuously aligned with the projection images of the corresponding letters **M** to be processed, that is, the ten small squares can be continuously processed by laser. Compared with the current method of processing only one object in the processing area and then changing to the next object for processing, the present patent application can process while calibrating, which can ensure the processing accuracy while performing continuous processing and improve the processing efficiency.

It should be noted that in a case that the synchronous movement speed of the expansion accessory 150 and the projected image is fast, if it is observed that the workpiece to be processed 20 is not aligned with the projected image, the expansion accessory 150 and the projected image can be controlled to pause moving, and after calibration and alignment, the expansion accessory 150 and the projected image can be controlled to move synchronously. In a case that the synchronous movement speed of the expansion accessory 150 and the projected image is slow, if it is observed that the workpiece to be processed 20 is not aligned with the projected image, it is not necessary to control the expansion accessory 150 and the projected image to pause moving, and calibration and alignment can be performed directly.

Referring to FIG. 7, FIG. 7 is a flowchart of steps for controlling the synchronous movement of the projection image and the workpiece to be processed provided by the embodiment of the present application. The flowchart in FIG. 7 is applied to the implementation environment shown in FIG. 1, including but not limited to steps S710 to S730.

Step S710, obtaining the moving speed of the workpiece to be processed.

Step S720, calculating the moving distance corresponding to each moment of the workpiece to be processed according to the moving speed.

Step S730, controlling and outputting the projection image corresponding to the corresponding moment according to the moving distance corresponding to each moment, so that the projection image and the workpiece to be processed move synchronously.

In the embodiment of the present application, the workpiece to be processed 20 is placed on the expansion accessory 150 and moves with the expansion accessory 150. The control board 110 can obtain the moving speed of the control expansion accessory 150. Then, the moving distance corresponding to each moment of the workpiece to be processed 20 is calculated according to the moving speed. Thus, the projection image corresponding to the element to be processed 10 or the calibration feature of the element to be processed 10 at each moment can be controlled and output according to the moving distance corresponding to each moment, so that the projection image and the workpiece to be processed 20 can move synchronously. That is to say, after pre-calculation, the control board 110 can control the expansion accessory 150 to move along the X-axis at a certain speed, while controlling the corresponding projection frame number of the element to be processed 10 or the calibration feature of the element to be processed 10, so that the projection image of the element to be processed 10 or the calibration feature of the element to be processed 10 can be observed in the processing area and also moves with the expansion accessory 150.

For example, if the expansion accessory 150 is controlled to move 10cm at a certain speed from the beginning, at this time, the projection image of the processing area needs to be synchronously controlled to be 0-10 frames of data, and the correspondence between the data of 0-10 frames and 10cm can be obtained in advance through experiments and calculations. In other words, the correspondence between the projection image and the workpiece to be processed 20 can be obtained in advance, so that the projection image and the workpiece to be processed 20 can be controlled to move synchronously.

In the embodiment of the present application, if the projection image corresponding to the element to be processed 10 or the projection image of the calibration feature of the element to be processed 10 can be fully projected and displayed in the processing area, it is not necessary to control the synchronous movement of the element to be processed 10 and the workpiece to be processed 20, and it is possible to directly detect whether the element to be processed 10 is projected at the target processing position of the workpiece to be processed 20 and perform calibration and alignment. If the projection image corresponding to the element to be processed 10 or the projection image of the calibration feature of the element to be processed 10 cannot be fully projected and displayed in the processing area, it is necessary to control the synchronous movement of the projection image and the workpiece to be processed 20 to achieve the calibration and alignment of the projection image and the workpiece to be processed 20. That is to say, in the embodiment of the present application, by controlling the synchronous movement of the projection image and the workpiece to be processed 20, it is possible to calibrate and align the element to be processed 10 and the workpiece to be processed 20 even if the element to be processed 10 cannot be fully projected and displayed in the processing area, thereby improving the processing accuracy.

It is understood that in order to reduce invalid movement, the workpiece to be processed 20 can be placed on the widening accessory 150 and aligned with the edge of the moving direction of the widening accessory 150.

In the embodiment of the present application, the element to be processed 10 can be first obtained through the device terminal 200. The element to be processed 10 is converted into a machine code that can be recognized and executed by the laser 100 and sent to the laser 100. After receiving the machine code, the laser 100 can project the element to be processed 10 or the calibration feature of the element to be processed in the processing area through the laser generator 130 to display the projected image in the processing area. Specifically, the laser 100 can control the synchronous movement of the projected image and the workpiece to be processed 20, that is, control the projected image to move with the workpiece to be processed 20. Therefore, in the case where the element to be processed 10 or the calibration feature cannot be fully projected and displayed in the processing area, the element to be processed 10 and the workpiece to be processed 20 can be calibrated and aligned during the movement to improve the processing accuracy. Moreover, during the calibration and alignment process, it can be determined whether the position of the projection image of the calibration feature of the processing area corresponds to the target processing position of the workpiece to be processed 20, so as to determine whether the element to be processed 10 is aligned with the workpiece to be processed 20, thereby improving the alignment efficiency and further improving the processing efficiency.

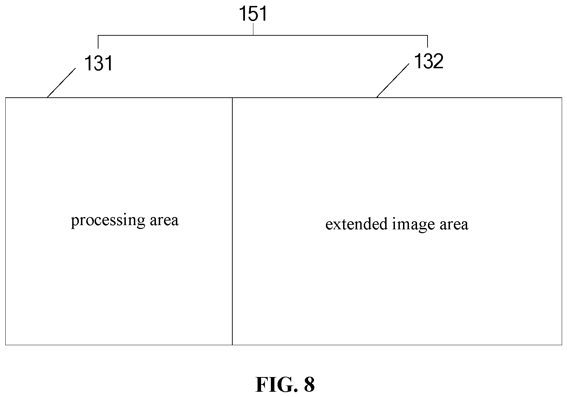

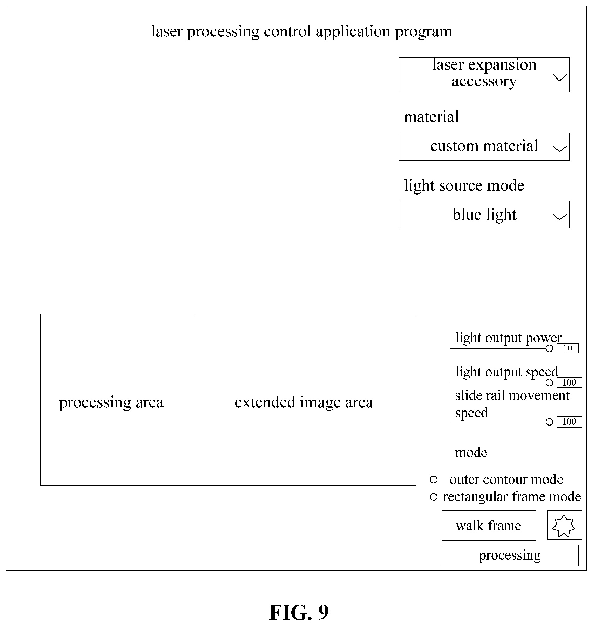

For example, a laser processing control application program or software can be run on the device terminal 200. After the expansion accessory 150 is connected to the control board 110 and the device terminal 200, the workpiece to be processed 20 is placed on the expansion accessory 150. The height of a laser head of the laser generator 130 is adjusted for focusing, so that the laser generator 130 starts to emit light to the processing area. The corresponding relationship between an expansion area 151 corresponding to the expansion accessory 150 and the processing area 131 is shown in FIG. 8. As shown in FIG. 8, the expansion area 151 includes a processing area 131 and an extended image area 132, and the processing area 131 overlaps the left area of the expansion area 151. For example, the processing area 131 may be a square area of 100×100, and the expansion area 151 may be a rectangular area of 100×400 including the processing area 131. The laser processing control application program or software is opened on the device terminal 200. Referring to FIG. 9, FIG. 9 is a schematic diagram of a display interface of the laser processing control application program provided in the embodiment of the present application. If an icon of "laser expansion accessory" on the display interface is clicked, the expansion area 151 can be displayed accordingly on the displayed front-end interface. At this time, the element file or data to be processed can be imported into the expansion area 151, or the data of the element to be processed can be directly drawn and designed in the expansion area 151. At this time, the element to be processed 10 can be displayed on the expansion area 151. Then, the light output speed, light output power, slide rail movement speed and alignment mode of the laser 10 can be selected. The slide rail is used to carry the expansion accessory 150 and drive the expansion accessory 150 to move in the X-axis direction. The alignment mode includes an outer contour mode and a rectangular frame mode. The outer contour mode is to control the display of the outer contour of the element to be processed 10 in the processing area, and the rectangular frame mode is to control the display of the rectangular frame where the element to be processed 10 is located in the processing area. After selection, an icon of "walk frame" is clicked to enter the walk frame alignment state. At this time, the user can control the element to be processed 10 and the expansion accessory 150 to move to the left synchronously by controlling a control knob on the laser 100. In the processing area, it can be observed whether the projected element outer contour or the rectangular frame where the element is located is at the target position of the workpiece to be processed 20, and it can be observed whether the projected element outer contour or the rectangular frame where the element is located moves with the workpiece to be processed. If the projected element outer contour or the rectangular frame where the element is located is not at the target position of the workpiece to be processed, a relevant prompt pops up on the front-end interface of the device terminal 200, that is, the user can manually rotate the control knob and move the slide rail left and right for accurate alignment. If the placement position of the workpiece to be processed 20 is deviated, the workpiece to be processed 20 stops when the hand is released, and the position of the workpiece to be processed 20 is fine-tuned, or the position of the element to be processed 10 is adjusted in the expansion area 151, so that the projected element outer contour or the rectangular frame where the element is located is at the target position of the workpiece to be processed. After the alignment is completed, an icon of "Stop Frame" on the front-end interface is clicked to exit the frame state, and the expansion accessory 150 automatically returns to the origin.

It should be noted that the moving speed of the slide rail is based on the speed value synchronized by the device terminal 200. By default, an upper limit speed is synchronized. If the user modifies the moving speed, the device terminal 200 may synchronize the modified speed value to the laser 100 to control the uniform movement of the guide rail. When the alignment is completed (including the end of the process), the device terminal 200 exits the frame-walking state and synchronizes the state to the laser 100, and the expansion accessory 150 automatically returns to the origin.

It should be noted that when the element to be processed 10 exceeds the expansion area 151, a pop-up page may be displayed to prompt that the element to be processed 10 exceeds the expansion area 151. At this time, the placement position of the element to be processed 10 needs to be adjusted before the frame-walking alignment and processing are performed.

For example, when the laser 100 is performing frame alignment and processing, the expansion accessory 150 is driven by a motor to move the workpiece 20 to the left. If the outer contour mode is selected for frame alignment, the expansion accessory 150 starts to move to the left, and the laser head of the laser generator 130 projects the outer contour of the element on the processing area. At this time, whether the outer contour of the element is at the target position of the workpiece to be processed 20 is observed, and whether the outer contour of the element moves to the left with the workpiece to be processed 20 is observed. If the projected outer contour of the element is not at the target position of the workpiece to be processed 20, it means that the alignment is inaccurate. The placement position of the workpiece to be processed 20 can be adjusted manually, or the position of the element to be processed 10 in the expansion area 151 can be adjusted until the projected outer contour of the element is at the target position of the workpiece to be processed 20. When the frame alignment is completed, the limit switch may be triggered, and the expansion accessory 150 may automatically return to the origin. When the frame alignment is stopped midway, the expansion accessory 150 may also automatically return to the origin.

It should be noted that the embodiment of the present application does not specifically limit the driving mode of the widening accessory 150. The widening accessory 150 is provided with a transmission member, so that the widening accessory 150 can be controlled to move by controlling the movement of the transmission member, thereby driving the movement of the workpiece to be processed 20.

It can be understood that in the embodiment of the present application, the widening accessory 150 and the projected image are synchronously moved, and alignment is performed first, and then processing is performed after the alignment is completed. The widening accessory 150 and the projected image can also be synchronously moved, and processing can be performed while alignment is performed. It is also possible to synchronously move the widening accessory 150 and the projected image for segmented alignment and then processing, that is, segmented alignment and segmented processing. The specific alignment and processing method can be determined according to the actual situation, for example, it can be determined according to the number, shape, size, and dimension of the workpiece to be processed 20 and the form of the element to be processed 10.

For example, a laser processing control application program or software can be run on the device terminal 20, and the device terminal 20 is connected to the laser 100. The device terminal 200 can form the acquired element to be processed 10 into a machine code (in data form) recognizable by the laser 100, and then send it to the control board 110 of the laser 100, and the control board 110 of the laser 100 can read the machine code to align and process the workpiece to be processed 20.

It should be noted that when the element to be processed 10 and the workpiece to be processed 20 are aligned by adjusting the position of the element to be processed on the device terminal 200 or by adjusting the position of the workpiece to be processed, a corresponding preview interface can be displayed on the display interface corresponding to the laser processing control application or software running on the device terminal 200, that is, whether the alignment is successful can be displayed through the preview interface.

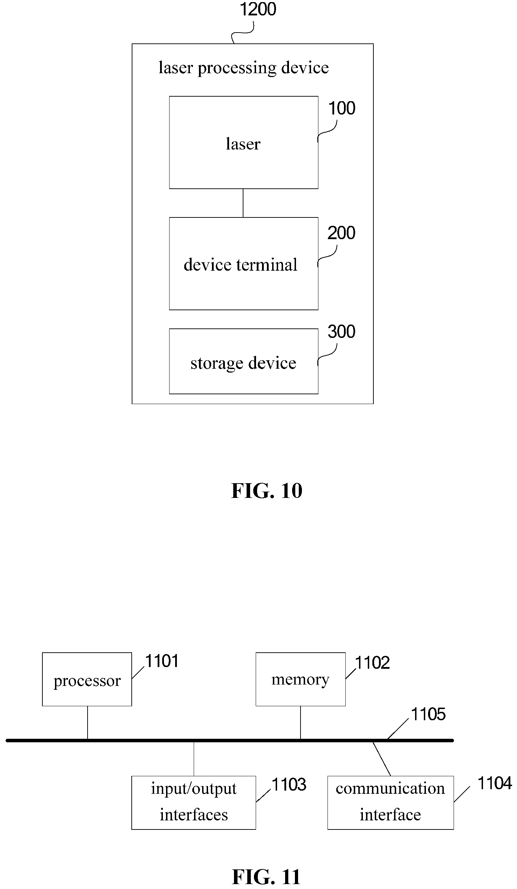

Referring to FIG. 10, the embodiment of the present application also provides a laser processing device 1200, including the laser 100, the device terminal 200 and a storage device 300. The storage device 300 is used to store one or more programs. When one or more programs are executed by the laser 100, the laser processing device 1200 implements the laser processing method proposed in this application.

The laser processing device 1200 of the embodiment of the present application includes the laser 100, the device terminal 200 and the storage device 300. Through the interaction between the laser 100 and the device terminal 200 and synchronously moving the projection image and the workpiece to be processed, the elements to be processed and the workpiece to be processed can be calibrated and aligned before processing, which can improve the processing accuracy.

The embodiment of the present application also provides an electronic device, the electronic device includes a memory and a processor, the memory stores a computer program, and the processor implements the above-mentioned laser processing method when executing the computer program. The electronic device can be any intelligent terminal including a tablet computer, a car computer, etc..

Referring to FIG. 11, FIG. 11 is a schematic diagram of a hardware structure of the electronic device provided in the embodiment of the present application. The electronic device includes: a processor 1101, a memory 1102, input/output interfaces 1103, a communication interface 1104, and a bus 1105, specifically,
the processor 1101 can be implemented as a general-purpose CPU (central processing unit), a microprocessor, an application-specific integrated circuit (ASIC), or one or more integrated circuits, etc., for executing relevant programs to implement the technical solution provided in the embodiment of the present application;
the memory 1102 can be implemented in the form of a read-only memory (ROM), a static storage device, a dynamic storage device or a random access memory (RAM), etc., the memory 1102 can store operating systems and other applications, when the technical solutions provided in the embodiments of this specification are implemented by software or firmware, the relevant program codes are stored in the memory 1102, and the processor 1101 is used to call and execute the laser processing method of the embodiments of this application;
the input/output interfaces 1103 are used to implement information input and output;
the communication interface 1104 is used to implement communication interaction between this device and other devices. Communication can be achieved through wired methods (such as USB, network cables, etc.) or wireless methods (such as mobile networks, WIFI, Bluetooth, etc.);
the bus 1105 transmits information between various components of the device (such as the processor 1101, the memory 1102, the input/output interfaces 1103 and the communication interface 1104);

The processor 1101, the memory 1102, the input/output interfaces 1103 and the communication interface 1104 realize communication connection among each other within the device through the bus 1105.

The embodiment of the present application also provides a storage medium, which is a computer-readable storage medium, and the storage medium stores a computer program, and the computer program implements the above-mentioned laser processing method when executed by the processor.

The memory, as a non-transitory computer-readable storage medium, can be used to store non-transitory software programs and non-transitory computer executable programs. In addition, the memory may include a high-speed random access memory, and may also include a non-transitory memory, such as at least one disk storage device, a flash memory device, or other non-transitory solid-state storage device. In some embodiments, the memory may optionally include a memory remotely arranged relative to the processor, and these remote memories may be connected to the processor via a network. Examples of the above-mentioned network include, but are not limited to, the Internet, an intranet, a local area network, a mobile communication network, and combinations thereof.

Through the description of the above implementation, it is easy for those skilled in the art to understand that the example implementation described here can be implemented by software or by software combined with necessary hardware. Therefore, the technical solution according to the implementation of the present application can be embodied in the form of a software product, which can be stored in a non-volatile storage medium (which can be a CD-ROM, a USB flash drive, a mobile hard disk, etc.) or on a network, and includes several instructions to enable a computing device (which can be a personal computer, a server, a terminal device, or a network device, etc.) to execute the method according to the implementation of the present application.

In an exemplary embodiment of the present application, a computer-readable storage medium is also provided, on which computer-readable instructions are stored, and when the computer-readable instructions are executed by a processor of a computer, the computer executes the method described in the above method embodiment.

According to one embodiment of the present application, a program product for implementing the method in the above method embodiment is also provided, which can use a portable compact disk read-only memory (CD-ROM) and include program code, and can be run on a terminal device, such as a personal computer. However, the program product of the present application is not limited to this. In this document, the readable storage medium can be any tangible medium containing or storing a program, which can be used by or in combination with an instruction execution system, device or device.

The program product may use any combination of one or more readable media. The readable medium may be a readable signal medium or a readable storage medium. The readable storage medium may be, for example, but not limited to, an electrical, magnetic, optical, electromagnetic, infrared, or semiconductor system, device or device, or any combination of the above. More specific examples of readable storage media (a non-exhaustive list) include: an electrical connection with one or more wires, a portable disk, a hard disk, a random access memory (RAM), a read-only memory (ROM), an erasable programmable read-only memory (EPROM or flash memory), an optical fiber, a portable compact disk read-only memory (CD-ROM), an optical storage device, a magnetic storage device, or any suitable combination of the above.

A computer readable signal medium may include a data signal propagated in baseband or as part of a carrier wave, in which a readable program code is carried. Such a propagated data signal may take a variety of forms, including but not limited to an electromagnetic signal, an optical signal, or any suitable combination of the above. A readable signal medium may also be any readable medium other than a readable storage medium that can send, propagate, or transmit a program for use by or in conjunction with an instruction execution system, device, or device.

The program code contained on the readable medium may be transmitted by any appropriate medium, including but not limited to wireless, wired, optical cable, RF, etc., or any suitable combination of the above.

The program code for performing the operation of the present application may be written in any combination of one or more programming languages, including object-oriented programming languages such as JAVA, C++, etc., and conventional procedural programming languages such as "C" language or similar programming languages. The program code may be executed entirely on the user computing device, partially on the user device, as a separate software package, partially on the user computing device and partially on a remote computing device, or entirely on a remote computing device or server. In the case of a remote computing device, the remote computing device may be connected to the user computing device through any type of network, including a local area network (LAN) or a wide area network (WAN), or may be connected to an external computing device (e.g., through the Internet using an Internet service provider).

It should be noted that although several modules or units of the device for action execution are mentioned in the above detailed description, such division is not mandatory. In fact, according to the implementation of the present application, the features and functions of two or more modules or units described above can be embodied in one module or unit. Conversely, the features and functions of one module or unit described above can be further divided into multiple modules or units.

In addition, although the steps of the method in the present application are described in a specific order in the accompanying drawings, this does not require or imply that these steps must be performed in this specific order, or that all the steps shown must be performed to achieve the desired results. In addition or alternatively, some steps can be omitted, multiple steps can be combined into one step for execution, and/or one step can be decomposed into multiple steps for execution, etc.

Through the description of the above implementation, it is easy for technicians in this field to understand that the example implementation described here can be implemented by software or by combining software with necessary hardware. Therefore, the technical solution according to the implementation of the present application can be embodied in the form of a software product, which can be stored in a non-volatile storage medium (which can be a CD-ROM, a USB flash drive, a mobile hard disk, etc.) or on a network, and includes several instructions to enable a computing device (which can be a personal computer, a server, a mobile terminal, or a network device, etc.) to execute the method according to the implementation of the present application.

Those skilled in the art will readily appreciate other embodiments of the present application after considering the specification and practicing the invention disclosed herein. The present application is intended to cover any modification, use or adaptation of the present application, which follows the general principles of the present application and includes common knowledge or customary techniques in the art that are not disclosed in the present application. The specification and examples are intended to be exemplary only, and the true scope and spirit of the present application are indicated by the appended claims.

## Claims

1. A laser processing method, comprising:
before an element to be processed is processed to a workpiece to be processed, determining whether the element to be processed and the workpiece to be processed are aligned according to a relationship between a position of a projection image in a processing area and a target processing position of the workpiece to be processed, wherein the projection image includes a projection image corresponding to at least a part of the element to be processed or a projection image corresponding to a calibration feature of the element to be processed;
if the element to be processed and the workpiece to be processed are not aligned, adjusting a position of the workpiece to be processed and/or a position of the element to be processed, so that the position of the projection image in the processing area corresponds to the target processing position of the workpiece to be processed.

2. The laser processing method according to claim 1, wherein that adjusting the position of the workpiece to be processed and/or the position of the element to be processed so that the position of the projection image in the processing area corresponds to the target processing position of the workpiece to be processed comprises:
adjusting the position of the workpiece to be processed and/or the position of the element to be processed so that the position of the projection image in the processing area overlaps with the target processing position of the workpiece to be processed.

3. The laser processing method according to claim 1, wherein before the element to be processed is processed to the workpiece to be processed, the method further includes:
acquiring the element to be processed, and the element to be processed includes at least one of text, symbols, lines, and graphics.

4. The laser processing method according to claim 1 or 3, wherein the element to be processed is acquired by at least one of following methods:
drawing the element to be processed;
identifying a file storing the element to be processed to obtain the element to be processed;
extracting features from an image of the element to be processed to obtain the element to be processed.

5. The laser processing method according to claim 3, wherein after acquiring the element to be processed, the method further includes:
converting the element to be processed into a machine code that is recognizable and executable by laser processing equipment.

6. The laser processing method according to claim 3, wherein after acquiring the element to be processed, the method further includes:
processing the element to be processed to obtain the calibration feature.

7. The laser processing method according to claim 6, wherein the calibration feature includes an outer contour of the element to be processed or a border of the area where the element to be processed is located, and the processing of the element to be processed to obtain the calibration feature includes:
performing element contour extraction processing or element area border extraction processing on the element to be processed to obtain the outer contour of the element to be processed or the border of the area of the element to be processed.

8. The laser processing method according to claim 6, wherein the calibration feature includes a key feature of the element to be processed or a diagonal position feature of the element to be processed, and the processing of the element to be processed to obtain the calibration feature includes:
performing key feature extraction processing or diagonal line extraction processing on the element to be processed to obtain the key feature of the element to be processed or the diagonal position feature of the element to be processed.

9. The laser processing method according to claim 1, wherein the step of determining whether the element to be processed and the workpiece to be processed are aligned according to the relationship between the position of the projection image in the processing area and the target processing position of the workpiece to be processed comprises:
if the element to be processed is a continuous closed element, controlling the projection image and the workpiece to be processed to move synchronously until at least one part of the projection image is observed in the processing area;
detecting whether the position of the at least one part of the projection image in the processing area corresponds to the corresponding target processing position on the workpiece to be processed;
if it is detected that the position of the at least one part of the projection image in the processing area corresponds to the corresponding target processing position on the workpiece to be processed, determining that the element to be processed and the workpiece to be processed are aligned.

10. The laser processing method according to claim 9, wherein if the element to be processed is a continuous closed element, the method further comprises:
if it is detected that the position of the at least one part of the projected image in the processing area does not correspond to the corresponding target processing position on the workpiece to be processed, it is determined that the element to be processed is not aligned with the workpiece to be processed;
adjusting the position of the workpiece to be processed and/or the position of the element to be processedk so that the position of the at least one part of the projected image in the processing area corresponds to the corresponding target processing position on the workpiece to be processed.

11. The laser processing method according to claim 1, wherein that determining whether the element to be processed and the workpiece to be processed are aligned according to the relationship between the position of the projection image in the processing area and the target processing position of the workpiece to be processed comprises:
if the element to be processed comprises discontinuously distributed elements, segmenting the projection image to obtain a plurality of sub-projection images;
controlling the projection image and the workpiece to be processed to synchronously move, and detecting whether the position of each sub-projection image in the processing area corresponds to the corresponding target processing sub-positions on the workpiece to be processed during the movement;
if it is detected during the movement that the position of each sub-projection image in the processing area corresponds to the corresponding target processing sub-positions on the workpiece to be processed, then determining the element to be processed and the workpiece to be processed are aligned.

12. The laser processing method according to claim 11, wherein if the element to be processed comprises discontinuously distributed elements, the method further comprises:
if it is detected during the movement that the position of each sub-projection image in the processing area does not correspond to each corresponding target processing sub-position on the workpiece to be processed, determining the element to be processed and the workpiece to be processed are not aligned;
adjusting the position of the element to be processed so that the position of each sub-projection image in the processing area corresponds to each corresponding target processing sub-position on the workpiece to be processed.

13. The laser processing method according to claim 9 or 11, wherein that controlling the the projection image and the workpiece to be processed to synchronously move comprises:
obtaining a moving speed of the workpiece to be processed;
calculating a moving distance of the workpiece to be processed at each moment according to the moving speed;
controlling and outputting the projection image corresponding to the corresponding moment according to the moving distance corresponding to each moment, so that the projection image and the workpiece to be processed move synchronously.

14. A laser processing device, comprising a laser, wherein the laser is used to execute the method according to any one of claims 1 to 13.

15. The device according to claim 14, wherein the laser processing device further comprises a device terminal, the device terminal is connected to the laser, and the device terminal interacts with the laser to execute the method according to any one of claims 1 to 13.

16. The device according to claim 15, wherein the laser includes a control board, a laser generator and an expansion accessory for moving along a first direction; the control board, the laser generator and the expansion accessory are all connected to the device terminal; the control board is connected to the laser generator and the expansion accessory; a processing area is formed below the laser, and a light beam emitted by the laser generator is focused on the processing area, the expansion accessory is located below the laser generator, and is used to carry the workpiece to be processed and drive the workpiece to be processed to move, and the expansion accessory passes through the processing area during the movement.

17. The device according to claim 16, wherein the laser further comprises a galvanometer, the galvanometer is connected to the device terminal, the galvanometer is also connected to the control board, and the galvanometer is used to reflect the laser beam emitted by the laser generator to change a laser emission angle.

18. The device according to claim 16 or 17, wherein the laser processing device further comprises a camera for capturing an image of the processing area.

19. An electronic device, wherein the electronic device comprises a memory and a processor, the memory stores a computer program, and the processor implements the method according to any one of claims 1 to 13 when executing a computer program.

20. A computer-readable storage medium, wherein the storage medium stores a computer program, and the computer program implements the method according to any one of claims 1 to 13 when executed by a processor.
